# EUROPÄISCHE PATENTSCHRIFT

(11) **EP 3 980 156 B1**
(45) Veröffentlichungstag und Bekanntmachung des Hinweises auf die Patenterteilung: **15.05.2024**
(21) Anmeldenummer: 20742226.2
(22) Anmeldetag: 15.07.2020
(51) Int. Cl.: B01D 29/23, B01D 35/027, B01D 35/147

(54) **FILTERVORRICHTUNG**
FILTER APPARATUS
DISPOSITIF DE FILTRATION

(30) Priorität: 25.07.2019 DE 102019005323; 25.07.2019 DE 102019005325; 25.07.2019 DE 102019005324; 25.07.2019 DE 102019005326
(43) Veröffentlichungstag der Anmeldung: 13.04.2022
(73) Patentinhaber: RT-Filtertechnik GmbH, 88048 Friedrichshafen (DE)
(72) Erfinder: STEHLE, Gerhard, 78467 Konstanz (DE); SAKRASCHINSKY, Michael, 66386 St. Ingbert (DE); WOZNIAK, Sven Peter, 78467 Konstanz (DE); SCHÖNFELD, Dirk, 99510 Apolda (DE); OTTO, John, 57350 Spicheren (FR); WOHLERS, Alexander, 54439 Saarburg (DE); BACKES, Alexander, 66646 Marpingen (DE); MORGENS, Klaus, 54293 Trier (DE); VAN UFFELEN, Florentin, 88079 Kressbronn a.B. (DE); TASSONE, Marco, 66121 Saarbrücken (DE); WALEK, Markus Stefan, 88682 Salem (DE)
(74) Vertreter: Bartels und Partner, Patentanwälte
(86) Internationale Anmeldenummer: PCT/EP2020/069965
(87) Internationale Veröffentlichungsnummer: WO 2021/013647

(56) Entgegenhaltungen:
- DE-A1-102014 007 312
- DE-A1-102015 003 604
- US-A- 4 320 005
- US-A1- 2012 312 759

## Beschreibung

Die Erfindung betrifft eine Filtervorrichtung mit den Merkmalen im Oberbegriff von Anspruch 1.

Filtervorrichtungen sind in einer Vielzahl von Ausgestaltungen und mit auswechselbaren Filterelementen, die unterschiedlichen Spezifikationen entsprechen, Stand der Technik. Die Filterelemente werden bei derartigen Filtervorrichtungen zur Pflege von Fluiden, insbesondere in hydraulischen Systemen, benutzt. Wie in dem Dokument DE 10 2015 003 604 A1 aufgezeigt ist, das eine Filtervorrichtung der eingangs genannten Gattung offenbart, sind solche Filtervorrichtungen mit Vorteil als sog. In-Tank-Filtervorrichtungen einsetzbar. Von einer Wandöffnung eines das Fluid bevorratenden Behälters oder Tanks ausgehend erstreckt sich bei der genannten bekannten Lösung das Filtergehäuse mit einem Filterkopf und einem daran anschließenden Filtertopf in Vertikalrichtung ins Innere des Tanks. Der Filtertopf ist in Form eines verhältnismäßig dünnwandigen Kreiszylinders am Filterkopf durch eine Einbördelung festgelegt. Die Länge des Filtertopfes ist derart bemessen, dass sich das untere Ende des Filtergehäuses unterhalb des niedrigsten, im Betrieb zu erwartenden Fluidniveaus, z. B. Hydrauliköl, im Tank befindet. Beim Filtrierbetrieb, bei dem das Fluid von einem am Bodenbereich des Tanks befindlichen Fluidkanal her über die untere Endkappe ins Innere des Filterelements gelangt und nach Durchströmen des Elementmaterials als Filtrat aus dem Filterelement austritt, bildet der Filtertopf ein Abströmrohr, das eine Perforation oder Fensteröffnungen aufweist, über die das Filtrat zum Tankinneren gelangt.

Die US 4 320 005 A beschreibt eine Filtervorrichtung mit den Merkmalen im Oberbegriff von Anspruch 1 mit einem Filtergehäuse, in dem ein austauschbares Filterelement aufgenommen ist und das ein Deckelteil aufweist, wobei das Elementmaterial des Filterelements sich zwischen zwei Endkappen desselben erstreckt, wobei das als Abströmrohr ausgebildete Filtergehäuse sich gleichfalls zwischen diesen beiden Endkappen erstreckt.

Weitere Filtervorrichtungen gehen aus der DE 10 2014 007 312 A1 und der US 2012/0312759 A1 hervor.

Ausgehend von diesem Stand der Technik stellt sich die Erfindung die Aufgabe, eine Filtervorrichtung der eingangs genannten Gattung zur Verfügung zu stellen, die sich durch eine besonders einfache und kostengünstig herstellbare Bauweise auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass in den Endkappen zur Bildung einer Aufnahme für das zugeordnete Ende des Abströmrohres jeweils eine schlitzartige Ringführung vorgesehen ist, die mit Wandteilen am Abströmrohr zumindest teilweise innen- und außenumfangsseitig angreifen.

Die aufgenommenen Enden können in der Schlitzführung mittels eines Klebstoffs gesichert sein.

Es ist ferner vorgesehen, dass das als Abströmrohr ausgebildete Filtergehäuse sich wie das Elementmaterial gleichfalls zwischen den beiden Endkappen erstreckt. Dadurch, dass dergestalt das Abströmrohr in das Filterelement integriert ist, besteht das gesamte, sich vom Deckelteil in den Tank erstreckende Filtergehäuse lediglich aus dem Filterelement. Der Filtertopf, wie er beim Stand der Technik den im Tank befindlichen Teil des Filtergehäuses und das mit dem Filterkopf verbundene Abströmrohr bildet, kommt somit in Wegfall. Da bei der erfindungsgemäß vorgesehenen Integration des Abströmrohres in das Filterelement auch kein Filterkopf erforderlich ist, ist die erfindungsgemäße Filtervorrichtung in stark vereinfachter Bauweise und mit entsprechend geringem Kostenaufwand herstellbar. Ein besonderer Vorteil besteht zudem darin, dass das Abströmrohr als integrales Bauteil des Filterelements kein bleibendes Bauteil der Filtervorrichtung bildet, sondern beim Filterelementwechsel mit ausgetauscht wird. Als Bauteil, das nicht über die Gesamtlebenszeit der Filtervorrichtung sicher funktionsfähig sein muss, kann daher das Abströmrohr aus einfachen und kostengünstigen Werkstoffen in leichter Bauweise gefertigt sein.

Mit Vorteil kann die Ringführung an einer Endkappe, vorzugsweise an der dem Deckelteil zugeordneten Endkappe, für das zugeordnete Ende des Abströmrohres ein axiales Spiel zulassen. Dadurch ist die Gefahr vermieden, dass bei vom Sollwert abweichenden Werten des Längenabstandes zwischen den Endkappen es zu einem Stauchen des Abströmrohres kommen kann. Bei der Herstellung des Filterelements sind daher für maßgebende Bauelemente, wie dem Stützrohr, keine engen Fertigungstoleranzen einzuhalten. Insbesondere bei längeren Filterelementen, beispielsweise mit aus Teilsegmenten zusammengesetztem Stützrohr, vereinfacht und verbilligt sich daher die Herstellung aufgrund der weniger engen, einzuhaltenden Toleranzen.

Bei besonders vorteilhaften Ausführungsbeispielen weist ein sich an der Außenseite des Elementmaterials zwischen den Endkappen erstreckendes Stützrohr eine Tragstruktur aus Längs- und Querholmen auf, die Fluiddurchlässe freilassen und von denen zumindest die Längsholme in einer Ausrichtung parallel zur Längsachse des Filterelements das Elementmaterial innenumfangsseitig abstützen und als Abstandhalter einen Freiraum zwischen dem Elementmaterial und dem Abströmrohr bilden. Bei der so gebildeten Führung für das Abströmrohr kann dieses besonders kostengünstig ausgebildet sein, beispielsweise durch eine Kunststofffolie.

Das Stützrohr kann aus einzelnen Teilsegmenten bestehen, die in Hintereinanderanordnung mittels Rastmitteln miteinander verrastbar sind, wobei die beiden äußeren Teilsegmente zu ihren freien äußeren Enden hin Rastmittel zum Verrasten mit der jeweils zuordenbaren Endkappe aufweisen. Für Filterelemente unterschiedlicher Baulängen lassen sich dadurch aus Kunststoff spritzgegossene Stützrohre herstellen, ohne dass für die jeweiligen Baulängen jeweils gesonderte Werkzeuge erforderlich sind. Wie im Dokument DE 198 26 032 A aufgezeigt ist, lassen sich in der Art eines Baukastensystems aus zwei oder mehreren Teilsegmenten, die jeweils eine vorgefertigte Baulänge besitzen, gewünschte Gesamtbaulängen durch Zusammensetzen der Teilsegmente realisieren.

Die dem Deckelteil zugeordnete Endkappe ist bei vorteilhaften Ausführungen mittels Raststegen mit dem Deckelteil auf dessen Innenseite verrastet. Der Montageaufwand für den Einbau der Filtervorrichtung in den Tank beschränkt sich dadurch auf das Anbringen des Deckelteils als Tankverschluss an der betreffenden Tanköffnung.

Mit Vorteil kann das Abströmrohr ein- oder mehrlagig und mit Durchlässen versehen ausgebildet sein. Ein zweilagiger Aufbau kann das Abströmverhalten der Flüssigkeit verbessern und dadurch die Entgasung von Luft aus dem Fluid begünstigen. Für die Lagen sind verschiedene Kombinationen von gelochten Bahnen, Geweben oder Gittern benutzbar, wobei die Auswahl von den Eigenschaften des betreffenden Fluids abhängt.

Bei bevorzugten Ausführungsbeispielen ist das Unfiltrat über die vom Deckelteil abgewandte untere Endkappe auf die Innenseite des Filterelements zugeführt, wobei das Filtrat über die Außenseite des Filterelements in Richtung auf das Abströmrohr hin abgeführt ist.

Bei vorteilhaften Ausführungsbeispielen ist in dem Deckelteil ein Bypassventil integriert, das im geöffneten Zustand über eine Öffnung der dem Deckelteil zugeordneten Endkappe einen Fluidweg zum Innenraum des Deckels herstellt, wobei die Endkappe in der Nähe ihres Umfangsrandes Durchgänge aufweist, die in den Freiraum an der Innenseite des Abströmrohres ausmünden. Dadurch gelangt auch ein bei Öffnen des Bypassventils möglicher Volumenstrom von der Oberseite der Endkappe her in den die Filtratseite bildenden Freiraum und damit über das Abströmrohr zum Tankinneren.

Nachstehend ist die Erfindung anhand der Zeichnung im Einzelnen erläutert. Es zeigen:
- Fig. 1: eine perspektivische Schrägansicht eines Ausführungsbeispiels der erfindungsgemäßen Filtervorrichtung;
- Fig. 2: eine mit zentraler vertikaler Schnittebene aufgeschnitten ge-zeichnete perspektivische Schrägansicht des Ausführungsbei-spiels, wobei das Deckelteil weggelassen ist;
- Fig. 3: eine vergrößert, abgebrochen und mit vertikaler zentraler Schnittebene aufgeschnitten gezeichnete perspektivische Schrägansicht lediglich des dem Deckelteil benachbarten oberen Endbereichs des Ausführungsbeispiels;
- Fig. 4: in gegenüber Fig. 3 weiter vergrößerter Darstellung in perspekti-vischer und mit vertikaler zentraler Schnittebene aufgeschnitten lediglich den oberen Endbereich des Filterelements des Ausführungsbeispiels;
- Fig. 5: in der Fig. 4 entsprechender Darstellung lediglich den auf einen Fluidkanal aufgesetzten unteren Endbereich des Filterelements des Ausführungsbeispiels;
- Fig. 6: eine perspektivische Schrägansicht des Filterelements mit teilweise aufgeschnittenem Abströmrohr; und
- Fig. 7: eine perspektivische Schrägansicht eines aus Teilsegmenten zusammengesetzten Längenabschnitts des Stützrohres des Ausführungsbeispiels.

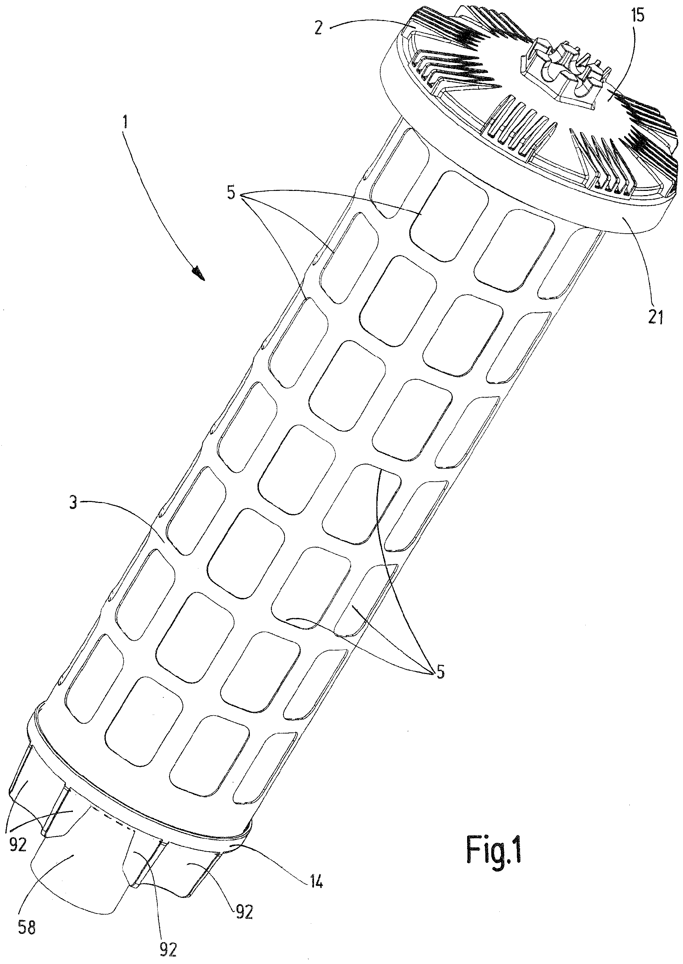

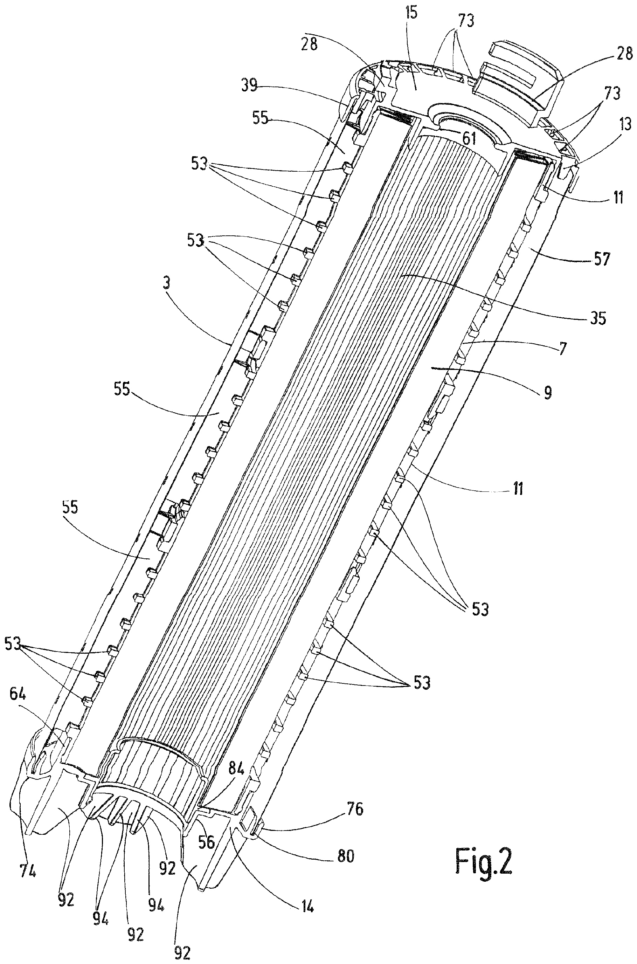

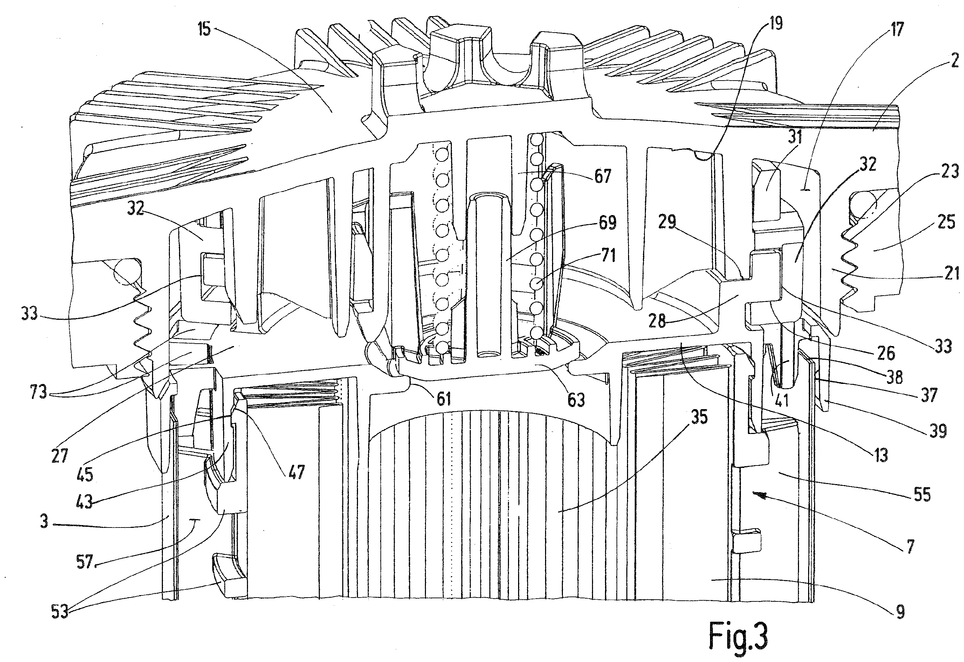

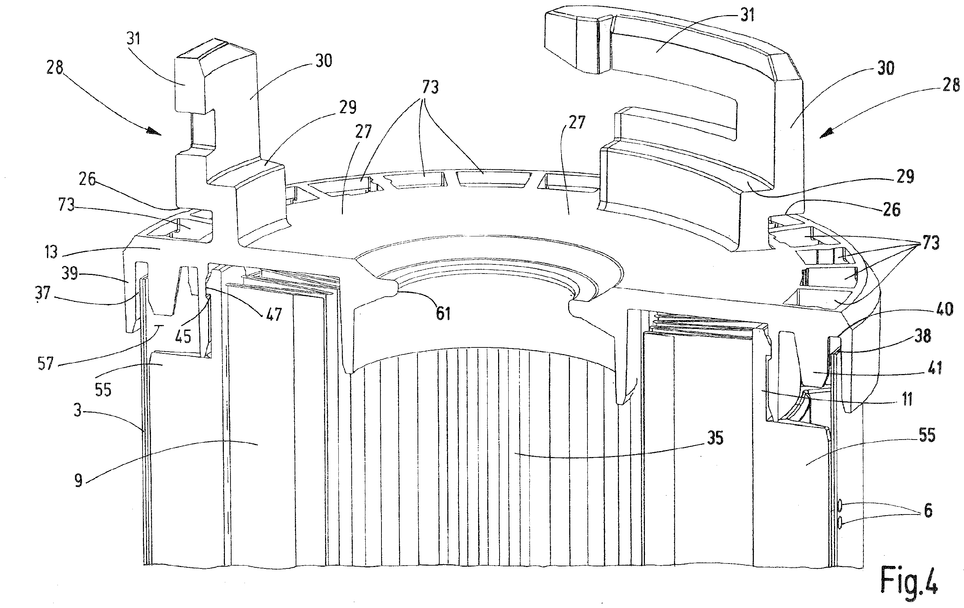

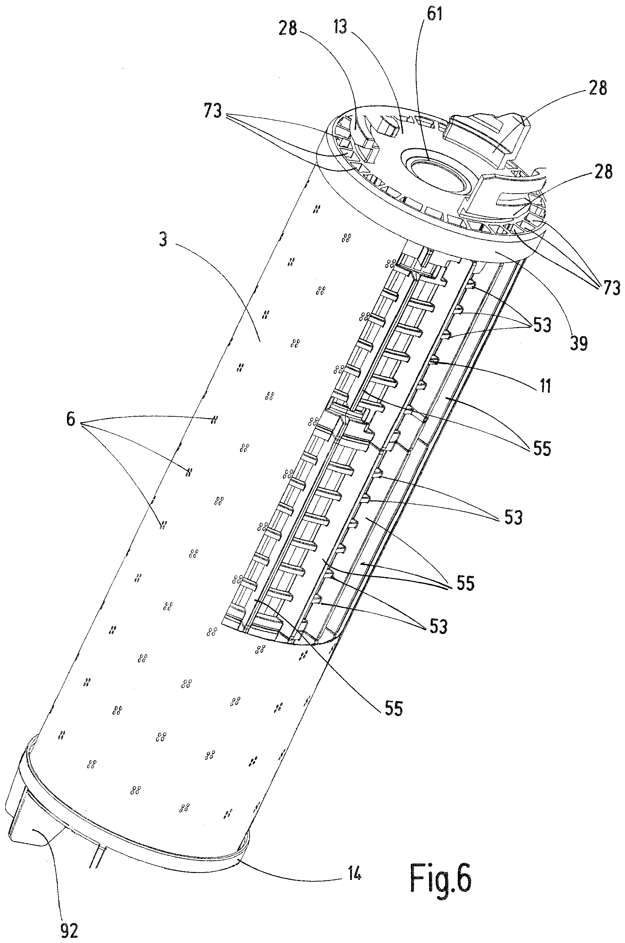

In Fig. 1, in der ein Ausführungsbeispiel der erfindungsgemäßen Filtervorrichtung in Form einer In-Tank-Filtervorrichtung zur Gänze dargestellt ist, ist das Filtergehäuse mit 1 bezeichnet, das aus einem Deckelteil 2 und einem Abströmrohr 3 gebildet ist. Letzteres weist Fluiddurchgänge in Form von Fenstern 5 (nur einige beziffert) oder, wie in Fig. 4 und 6 angedeutet, eine Perforation 6 auf. Die Fig. 2 und 6 zeigen den Teil des Filtergehäuses 1, der vom Deckelteil 2, das in den Fig. 2 und 6 weggelassen ist, sich in das Innere des betreffenden, nicht dargestellten Tanks erstreckt und aus einer Baueinheit besteht, gebildet aus Filterelement 7 und integralem Bestandteil desselben bildendes Abströmrohr 3. Das Filterelement 7 weist, wie üblich, ein hohlzylinderförmiges Elementmaterial 9 auf, das sich zusammen mit einem Stützrohr 11 zwischen einer oberen Endkappe 13 und einer unteren Endkappe 14 erstreckt. Die obere, dem Deckelteil 2 zugeordnete Endkappe 13 ist, wie mit Bezug auf Fig. 2 bis 4 unten näher ausgeführt wird, mit der Innenseite des Deckelteils 2 verrastbar. Wie Fig. 3 zeigt, weist das Deckelteil 2 eine leicht konvex gewölbte Oberseite 15 und einen wannenförmigen Innenraum 17 auf, dessen Boden 19 eine der Wölbung der Oberseite 15 entsprechende konkave Wölbung besitzt. Am Umfang ist der Innenraum 17 durch eine axial vorspringende, kreiszylindrische Seitenwand 21 begrenzt, die ein Außengewinde 23 aufweist, mit dem das Deckelteil 2 mit einem Befestigungsflansch 25 (Fig. 3) verschraubbar ist, der sich an der Tanköffnung eines betreffenden, nicht gezeigten Tanks befindet. Die Einrichtung zur Verrastung der Endkappe 13 mit dem Deckelteil 2 weist drei von der Oberseite 27 nach oben vorstehende Raststege 28 auf, die in der Nähe des Umfangs der Oberseite 27 um 120° zueinander versetzt angeordnet sind und von denen in den Figuren nicht sämtliche sichtbar sind. Die Raststege 28 haben jeweils die Form eines zur Vorrichtungslängsachse koaxialen Kreiszylinderabschnitts und sind in Axialrichtung abgekröpft, wobei sie über in Radialebenen verlaufende Stufenflächen 26 und 29 in ein radial nach außen versetztes Wandteil 30 übergehen, an den sich am oberen Ende eine Endleiste 31 anschließt. Wie Fig. 3 zeigt, sind den Raststegen 28 zugeordnete, im Innenraum 17 des Deckelteils 2 mit dem Boden 19 verbundene Haltekörper 32 vorgesehen. Diese weisen eine innere, koaxiale Führungskulisse 33 auf, in die durch eine relative Drehbewegung zwischen Endkappe 13 und Deckelteil 2 die Raststege 28 derart einfahrbar sind, dass die Stufenflächen 26 und 29 unter Bildung einer Art Bajonettverschluss die Endkappe 13 formschlüssig am Deckelteil 2 verriegeln.

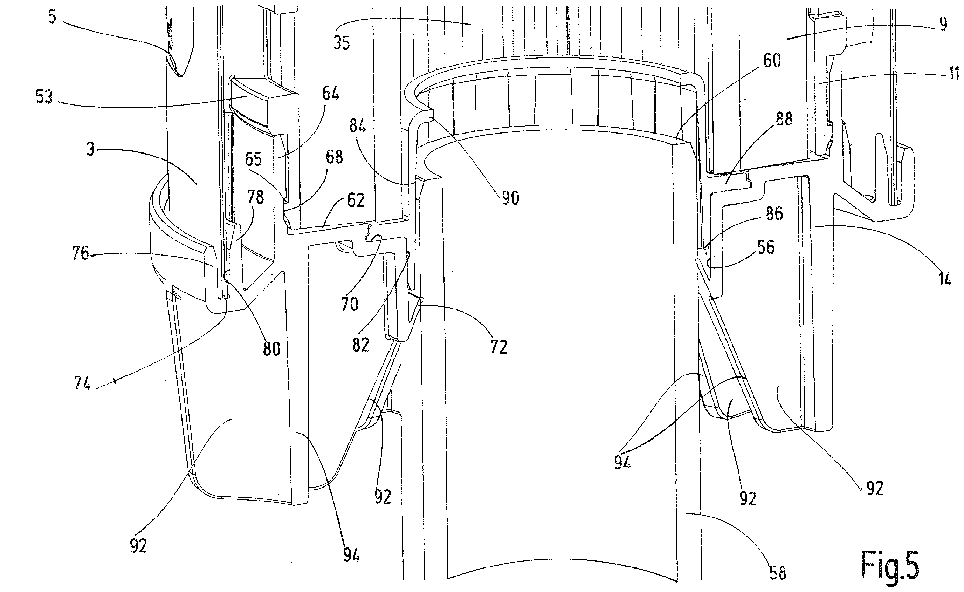

Die Fig. 5 zeigt die Ausbildung der unteren Endkappe 14, über die für den Filtrierbetrieb das Unfiltrat in den inneren Filterhohlraum 35 gelangt. Die Endkappe 14 weist für das Einströmen von Unfiltrat in den inneren Filterhohlraum 35 eine zentrale Öffnung 56 auf. Für die Zufuhr des Unfiltrats ist am Bodenbereich des (nicht gezeigten) Tanks ein Fluidkanal in Form eines Rohrstutzens 58 vorgesehen, der ortsfest verankert ist und in der Funktionsposition in die Öffnung 56 eingreift und den Fluidweg in den Filterhohlraum 35 bildet. Die untere Endkappe 14 weist als Einfassung für die zugewandten Enden des Elementmaterials 9 und des Stützrohres 11 an der Oberseite eine ebene Anlagefläche 62 auf, die radial außenseitig von einem nach oben axial vorspringenden Umfangsrand 64 begrenzt ist. Dieser weist an der Innenseite eine Rastkerbe 65 auf, mit der eine Rastnase 68 des Stützrohres 11 verrastbar ist, sodass das Stützrohr 11 an der Endkappe 14 axial gesichert ist. An den Umfangsrand 64 radial nach innen anschließend weist die Anlagefläche 62 einen ebenflächigen Abschnitt auf, an den sich am radial inneren Ende eine stufenförmige, vertiefte Ausnehmung 70 anschließt, die den Übergang zur Öffnung 56 bildet. An dem von der Ausnehmung 70 axial nach unten versetzten Ende der zentralen Öffnung 56 bildet die Endkappe 14 eine angeformte, umlaufende Dichtlippe 72, die im Querschnitt die Form einer dünnen Zunge besitzt, die sich von der Wand der Öffnung 56 abgespreizt schräg nach innen und nach oben in Richtung auf das Filterelement 7 erstreckt. Entsprechend den Elastizitätseigenschaften des die Endkappe 32 bildenden Kunststoffmaterials ist die Dichtlippe 72 elastisch nachgiebig und schmiegt sich daher mit Dichtkraft an die Außenseite des Rohrstutzens 58 an. In dem sich an den Umfangsrand 64 radial nach außen anschließenden Umfangsbereich bildet die Endkappe 14 eine vertiefte Rinne 74, in der zwischen einem äußeren Umfangsrand 76 und einem inneren Ringkörper 78 ein schlitzförmiger Ringraum 80 gebildet ist, in den das Abströmrohr 3 eingesteckt aufgenommen ist. Durch Verkleben kann das Abströmrohr 3 im Ringraum 80 gesichert sein. An ihrer Unterseite setzt sich die Endkappe 14, anschließend an die Ausnehmung 70, in einem kanalartigen Abschnitt 82 nach unten fort, an dessen Ende die Dichtlippe 72 angeformt ist. Der Kanalabschnitt 82 bildet zusammen mit einer Führungshülse 84 die Führung für den Rohrstutzen 58, der sich beim Aufsetzen des Filterelements 7 durch die Öffnung 56 der Endkappe 14 in den inneren Filterhohlraum 35 erstreckt. Die Hülse 84 weist oberhalb ihres unteren Endes 86 einen radial nach außen vorstehenden Ringflansch 88 auf und ist in der Öffnung 56 der Endkappe 14 so aufgenommen, dass der Ringflansch 88 in der Ausnehmung 70 passend sitzt. Das andere obere Ende der Hülse 84 weist eine Einbördelung 90 nach innen auf, die einen Anschlagkörper für den oberen Endrand 60 des Rohrstutzens 58 und damit einen Endanschlag bildet, der die Einsetzbewegung des Rohrstutzens 58 beim Einsetzen des Filterelements 7 begrenzt. Zur Bildung einer Einfahrhilfe beim Aufsetzen des Filterelements 7 weist die Endkappe 14 als Führungseinrichtung, die sich an das untere Ende der Öffnung 56 anschließt, einen Kranz angeformter in Umfangsrichtung verteilter flügelartiger und axial nach unten vorstehender Führungsstege 92 auf, die mit ihrem radial innenliegenden Rand Führungsflächen 94 bilden, die einen konischen Verlauf nach oben und innen besitzen. Gemeinsam umschreiben dadurch die Führungsflächen 94 eine Art Einführtrichter, der das Aufsetzen des Filterelements 7 auf den Rohrstutzen 58 erleichtert.

In gleicher Weise, wie an der unteren Endkappe 14 durch den Ringraum 80 eine Schlitzführung für das untere Ende des Abströmrohres 3 gebildet ist, ist auch an der oberen Endkappe 13 als Ringführung, in die das obere Ende 38 des Abströmrohres 3 einsteckbar ist, ein Ringraum 37 zwischen einem äußeren Umfassungsrand 39 der Endkappe 13 und einem von der Unterseite der Endkappe 13 axial vorstehenden Ringkörper 41 gebildet. Radial weiter innenliegend bildet ein von der Unterseite der Endkappe 13 koaxial nach unten vorstehendes Wandteil 43 die Einfassung für das obere Ende des Elementmaterials 9 und das obere Ende des Stützrohres 11. Wie bei der unteren Endkappe 14 ist für die Verrastung des Stützrohres 11 am Wandteil 43 eine Rastkerbe 45 und am Stützrohr 11 eine Rastnase 47 vorgesehen, die das Stützrohr 11 an der Endkappe 13 verrastet.

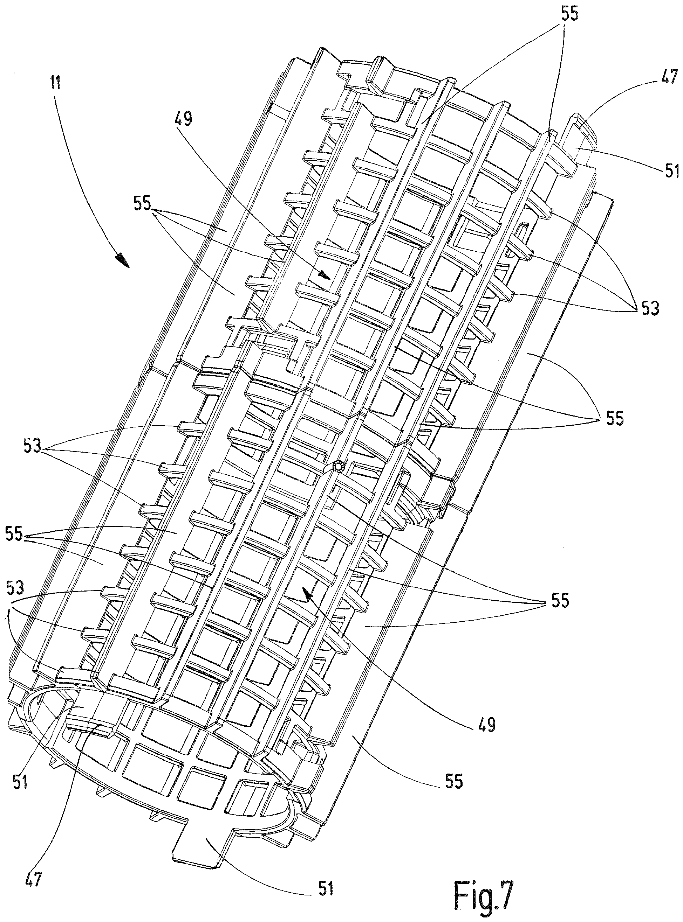

Wie am deutlichsten den Fig. 6 und 7 entnehmbar ist, ist das Stützrohr 11 als gitterartige Tragstruktur aus drei Teilsegmenten 49 zusammengesetzt, die durch aus Kunststoff spritzgegossene Gleichteile gebildet sind, die mittels Rastmitteln miteinander verbindbar sind. Die jeweils äußeren, mit einer Endkappe 13, 14 zu verrastenden Teilsegmente 49 weisen am Außenumfang zwei diametral zueinander angeordnete Rastzungen 51 auf, an denen die radial nach außen vorstehenden Rastnasen 47 angeformt sind, mit denen, s. Fig. 3 und 4, das obere Ende des Stützrohres 11 mit den Endkappen 13, 14 verrastbar ist. Wie am deutlichsten aus Fig. 7 entnehmbar ist, ist die Gitterstruktur aus Querholme bildenden Ringsegmenten 53, die in gleichen Abständen voneinander in Radialebenen verlaufen, sowie aus die Ringsegmente 53 verbindenden Längsholmen aufgebaut, die durch parallele, in gleichen Abständen voneinander verlaufende flache Leisten 55 (ebenfalls nicht sämtliche beziffert) gebildet sind, die flügelartig über die Ringsegmente 53 radial vorstehen. Mit ihrer Außenkante bilden die Leisten 55 Führungsflächen für das anliegende Abströmrohr 3, wobei die Leisten 55 wegen ihres radialen Überstandes über die Ringsegmente 53 als Abstandhalter einen Freiraum 57 zwischen dem Elementmaterial 9 und dem umgebenden Abströmrohr 3 bilden. Beim Filtrierbetrieb, bei dem das Fluid aus dem inneren Filterhohlraum 35 das Elementmaterial 9 nach außen durchströmt, bildet dieser Freiraum daher die Filtratseite, aus der das Filtrat über die Durchlässe des Abströmrohres 6 ins Tankinnere austritt.

Die obere Endkappe 13 weist eine zentrale Öffnung 61 auf, die einen möglichen Durchgang vom Filterhohlraum 35 zum Innenraum 17 des Deckelteils 2 bildet, jedoch normalerweise durch den Schließkörper 63 eines im Deckelinnenraum 17 befindlichen Bypassventils geschlossen ist. Das Bypassventil weist eine vom Boden 19 des Deckelteils 2 koaxial vorspringende Führungshülse 67 auf, in der ein Schaft 69 des Schließkörpers 63 verschiebbar geführt ist. Eine die Hülse 67 umgebende Druckfeder 71, die zwischen dem Boden 19 des Deckelteils und dem tellerförmigen Schließkörper 63 des Bypassventils eingespannt ist, spannt diesen in die Schließstellung vor. Wie am deutlichsten in den Fig. 4 und 6 gezeigt ist, weist die obere Endkappe 13 in der Nähe ihres Umfangsrandes einen Kranz von Durchgängen 73 auf, die Fluidwege von der Oberseite 27 der Endkappe 13 zu dem darunterliegenden Freiraum 57 bilden. Bei vom Unfiltratdruck bewirktem Öffnen des Bypassventils gelangt dadurch das in den Deckelinnenraum 17 einströmende Unfiltrat über die Durchgänge 73 zur Filtratseite im Freiraum 57 und gelangt von dort über das Abströmrohr 3 ins Tankinnere. Bei der von den flügelartigen Leisten 55 gebildeten Führung für das Abströmrohr 3 kann dieses aus einer dünnwandigen Materialbahn gebildet sein, beispielsweise in Form einer Kunststofffolie. Mit besonderem Vorteil kann eine mehrlagige Ausbildung vorgesehen sein. Beispielsweise kann durch einen zweilagigen Aufbau das Abströmverhalten verbessert und die Entgasung von Luft aus dem Fluid begünstigt werden. Wie Fig. 4 zeigt, befindet sich das Ende 38 des Abströmrohres 3 in einem geringen Abstand vom Grund 40 der Ringführung 37. Für das eingesteckte Ende des Abströmrohres 3 steht daher ein axiales Spiel zur Verfügung, sodass Längenabweichungen des Abstandes der Endkappen 13, 14 kompensierbar sind und dadurch ein mögliches Ausbeulen des Abströmrohres 3 verhindert ist.

## Patentansprüche

1. Filtervorrichtung mit einem Filtergehäuse (1), in dem ein austauschbares Filterelement (7) aufgenommen ist und das ein Deckelteil (2) aufweist, wobei das Elementmaterial (9) des Filterelements (7) sich zwischen zwei Endkappen (13, 14) desselben erstreckt, wobei das als Abströmrohr (3) ausgebildete Filtergehäuse (1) sich gleichfalls zwischen diesen beiden Endkappen (13, 14) erstreckt, **dadurch gekennzeichnet, dass** in den Endkappen (13, 14) zur Bildung einer Aufnahme für das zugeordnete Ende (38) des Abströmrohres (3) jeweils eine schlitzartige Ringführung (37, 80) vorgesehen ist, die mit Wandteilen am Abströmrohr (3) zumindest teilweise innen- und außenumfangsseitig angreifen.

2. Filtervorrichtung nach Anspruch 1, **dadurch gekennzeichnet, dass** die Ringführung in einer Endkappe (13, 14), vorzugsweise an der dem Deckelteil (2) zugeordneten Endkappe (13), für das zugeordnete Ende (38) des Abströmrohres (3) ein axiales Spiel zulässt.

3. Filtervorrichtung nach Anspruch 1 oder 2, **dadurch gekennzeichnet, dass** ein sich an der Außenseite des Elementmaterials (9) zwischen den Endkappen (13, 14) erstreckendes Stützrohr (11) eine Tragstruktur aus Längs- (55) und Querholmen (53) aufweist, die Fluiddurchlässe freilassen und von denen zumindest die Längsholme (55) in einer Ausrichtung parallel zur Längsachse des Filterelements (7) das Elementmaterial (9) innenumfangsseitig abstützen und als Abstandhalter einen Freiraum (57) zwischen dem Elementmaterial (9) und dem Abströmrohr (3) bilden.

4. Filtervorrichtung nach Anspruch 3, **dadurch gekennzeichnet, dass** das Stützrohr (11) aus einzelnen Teilsegmenten (49) besteht, die in Hintereinanderanordnung mittels Rastmitteln miteinander verrastbar sind, und dass die beiden äußeren Teilsegmente (49) zu ihren freien äußeren Enden hin Rastmittel (47, 51) zum Verrasten mit der jeweils zuordenbaren Endkappe (13, 14) aufweisen.

5. Filtervorrichtung nach einem der vorstehenden Ansprüche, **dadurch gekennzeichnet, dass** die dem Deckelteil (2) zugeordnete Endkappe (13) mittels Raststegen (28) mit dem Deckelteil (2) auf dessen Innenseite (19) verrastet ist.

6. Filtervorrichtung nach einem der vorstehenden Ansprüche, **dadurch gekennzeichnet, dass** das Abströmrohr (3) ein- oder mehrlagig und mit Durchlässen (5, 6) versehen ausgebildet ist.

7. Filtervorrichtung nach einem der vorstehenden Ansprüche, **dadurch gekennzeichnet, dass** das Unfiltrat über die vom Deckelteil (2) abgewandte untere Endkappe (14) auf die Innenseite (35) des Filterelements (7) zugeführt ist und dass das Filtrat über die Außenseite des Filterelements (7) in Richtung auf das Abströmrohr (3) hin abgeführt ist.

8. Filtervorrichtung nach einem der vorstehenden Ansprüche, **dadurch gekennzeichnet, dass** in dem Deckelteil (2) ein Bypassventil (67) integriert ist, das im geöffneten Zustand über eine Öffnung (62) der dem Deckelteil (2) zugeordneten Endkappe (13) einen Fluidweg zum Innenraum (17) des Deckelteils (2) herstellt, und dass die Endkappe (13) in der Nähe ihres Umfangsrandes Durchgänge (73) aufweist, die in den Freiraum (57) an der Innenseite des Abströmrohres (3) ausmünden.

## Claims

1. Filter device having a filter housing (1) in which a replaceable filter element (7) is accommodated and which has a cover part (2), wherein the element material (9) of the filter element (7) extends between two end caps (13, 14) thereof, wherein the filter housing (1) configured as an outflow pipe (3) likewise extends between these two end caps (13, 14), **characterised in that** a slot-like annular guide (37, 80) is provided in each of the end caps (13, 14) to form a receptacle for the associated end (38) of the outflow pipe (3), which annular guides engage at least partially on the inner and outer circumference with wall parts on the outflow pipe (3).

2. Filter device according to claim 1, **characterised in that** the annular guide in one end cap (13, 14), preferably on the end cap (13) associated with the cover part (2), permits axial clearance for the associated end (38) of the outflow pipe (3).

3. Filter device according to claim 1 or 2, **characterised in that** a supporting tube (11) extending on the outside of the element material (9) between the end caps (13, 14) has a support structure of longitudinal (55) and transverse struts (53) which leave fluid apertures open and of which at least the longitudinal struts (55) support the element material (9) on the inner circumference in an orientation parallel to the longitudinal axis of the filter element (7) and as spacers form a free space (57) between the element material (9) and the outflow pipe (3).

4. Filter device according to claim 3, **characterised in that** the supporting tube (11) consists of individual partial segments (49) which can be locked together one behind the other by means of locking means, and **in that** the two outer partial segments (49) have locking means (47, 51) towards their free outer ends for locking to the respectively assignable end cap (13, 14).

5. Filter device according to one of the preceding claims, **characterised in that** the end cap (13) associated with the cover part (2) is locked to the cover part (2) on the inside (19) thereof by means of locking bars (28).

6. Filter device according to one of the preceding claims, **characterised in that** the outflow pipe (3) is configured in one or more layers and is provided with apertures (5, 6).

7. Filter device according to one of the preceding claims, **characterised in that** the unfiltered medium is supplied to the inside (35) of the filter element (7) via the lower end cap (14) directed away from the cover part (2) and **in that** the filtrate is discharged towards the outflow pipe (3) via the outside of the filter element (7).

8. Filter device according to one of the preceding claims, **characterised in that** a bypass valve (67) is integrated in the cover part (2), which valve, in the open state, establishes a fluid path to the interior (17) of the cover part (2) via an opening (62) of the end cap (13) associated with the cover part (2), and **in that** the end cap (13) has passages (73) in the vicinity of its peripheral edge which open out into the free space (57) on the inside of the outflow pipe (3).

## Revendications

1. Dispositif de filtration comprenant une enveloppe (1) de filtre, dans laquelle est logé un élément (7) de filtre remplaçable et qui a une partie (2) formant couvercle, dans lequel la matière (9) de l'élément (7) de filtre s'étend entre deux coiffes (13, 14) d'extrémité de celui-ci, dans lequel l'enveloppe (1) de filtre, constituée sous la forme d'un tube (3) d'écoulement, s'étend de la même façon entre ces deux coiffes (13, 14) d'extrémité, **caractérisé en ce que,** dans les coiffes (13, 14) d'extrémité est prévu, pour la formation d'un logement de l'extrémité (38) associée du tube (3) d'écoulement, respectivement un guidage (37, 80) annulaire de type à fente, qui, par des parties de paroi du tube (3) d'écoulement, attaquent au moins en partie du côté du pourtour intérieur et extérieur.

2. Dispositif de filtration suivant la revendication 1, **caractérisé en ce que** le guidage annulaire autorise un jeu axial de l'extrémité (38) associée du tube (3) d'écoulement dans une coiffe (13, 14) d'extrémité, de préférence dans la coiffe (13) d'extrémité associée à la partie (2) formant couvercle.

3. Dispositif de filtration suivant la revendication 1 ou 2, **caractérisé en ce qu'**un tube (11) d'appui, s'étendant sur la face extérieure de la matière (9) de l'élément entre les coiffes (13, 14) d'extrémité, a une structure porteuse composée de longerons (55) et de traverses (53), qui laissent libres des passages pour du fluide et dont au moins les longerons (55) appuient du côté du pourtour intérieur la matière (9) de l'élément dans une orientation parallèlement à l'axe longitudinal de l'élément (7) de filtre et forment comme entretoise un espace (57) libre entre la matière (9) de l'élément et le tube (3) d'écoulement.

4. Dispositif de filtration suivant la revendication 3, **caractérisé en ce que** le tube (11) d'appui est constitué de segments (49) partiels individuels, qui peuvent s'encliqueter les uns dans les autres suivant un agencement l'un derrière l'autre, à l'aide de moyens d'encliquetage, et **en ce que** les deux segments (49) partiels extérieurs ont, vers leurs extrémités extérieures libres, des moyens (47, 51) d'encliquetage pour s'encliqueter avec la coiffe (13, 14) d'extrémité pouvant être associée respectivement.

5. Dispositif de filtration suivant l'une des revendications précédentes, **caractérisé en ce que** la coiffe (13) d'extrémité associée à la partie (2) formant couvercle, est encliquetée au moyen de barrettes (28) d'encliquetage avec la partie (2) formant couvercle sur sa face (19) intérieure.

6. Dispositif de filtration suivant l'une des revendications précédentes, **caractérisé en ce que** le tube (3) d'écoulement est constitué en une couche ou en plusieurs couches et est pourvu de traversées (5, 6).

7. Dispositif de filtration suivant l'une des revendications précédentes, **caractérisé en ce que** le non filtrat est, par la coiffe (14) d'extrémité inférieure loin de la partie (2) formant couvercle, amené sur la face (35) intérieure de l'élément (7) de filtre et **en ce que** le filtrat est, par la face extérieure de l'élément (7) de filtre, évacué en direction du tube (3) d'écoulement.

8. Dispositif de filtration suivant l'une des revendications précédentes, **caractérisé en ce qu'**à la partie (2) formant couvercle est intégrée une soupape (67) de dérivation, qui, à l'état ouvert, ménage, par une ouverture (62) de la coiffe (13) d'extrémité associée à la partie (2) formant couvercle, un trajet pour du fluide vers l'espace (17) intérieur de la partie (2) formant couvercle, et **en ce que** la coiffe (13) d'extrémité a, à proximité de son bord périphérique, des passages (73), qui débouchent dans l'espace (57) libre sur la face intérieure du tube (3) d'écoulement.
